(19) Europäisches Patentamt
European Patent Office
Office européen des brevets

(11) **EP 3 545 037 B1**

(12) **EUROPEAN PATENT SPECIFICATION**

(45) Date of publication and mention of the grant of the patent:
**19.08.2020 Bulletin 2020/34**

(21) Application number: **17800459.4**

(22) Date of filing: **06.11.2017**

(51) Int Cl.:
*C08L 23/14* (2006.01)          *C08L 51/06* (2006.01)
*C08K 7/14* (2006.01)

(86) International application number:
**PCT/EP2017/078348**

(87) International publication number:
**WO 2018/095720 (31.05.2018 Gazette 2018/22)**

(54) **FILLED POLYOLEFIN COMPOSITION**

GEFÜLLTE POLYOLEFINZUSAMMENSETZUNG

COMPOSITION DE POLYOLÉFINE CHARGÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2016 EP 16200275**

(43) Date of publication of application:
**02.10.2019 Bulletin 2019/40**

(73) Proprietor: **Basell Poliolefine Italia S.r.l.**
**20121 Milano (IT)**

(72) Inventors:
• **MECKLENBURG, Thomas**
**35510 Butzbach (DE)**
• **KLEMM, Klaus**
**97656 Oberelsbach (DE)**
• **LICHT, Erik Hans**
**55128 Mainz (DE)**
• **ROHRMANN, Jürgen**
**65779 Kelkheim (DE)**
• **MASSARI, Paola**
**44122 Ferrara (IT)**
• **DESTRO, Mara**
**44122 Ferrara (IT)**
• **CIARAFONI, Marco**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2014/033017      US-A1- 2004 220 325**
**US-A1- 2016 137 823**

**Description**

FIELD OF THE INVENTION

The present invention relates to a composition comprising a propylene-1-hexene random copolymer having a content of 1-hexene derived units ranging from 0.6 wt% to 3.0 wt%, a compatibilizer and fibers, especially suitable for the production of automotive components, such as instrument panel carrier and front end carrier, cooling water surge tanks and automotive radiator parts as well as electrical appliances components under high load, elevated temperatures and partly exposed to hot water, coolants, steam and detergent solutions.

BACKGROUND OF THE INVENTION

Filled polypropylene is a material widely used in many different technical fields. In particular, polypropylene filled with glass fibers is usually employed when high flexural modulus, tensile modulus, heat deflection resistance, hydrolysis resistance and resistance to impact are required. Such materials enable a tailoring of the properties of the composition by selecting the type of polypropylene and the amount of fiber.

Accordingly, nowadays glass-fiber reinforced polypropylene is a well-established material for applications requiring high stiffness, heat deflection resistance and resistance to both impact and dynamic fracture loading, such as automotive components with a load-bearing function in the engine compartment, support parts for polymer body panels, washing machine and dishwasher components.

Very often these components are exposed to high temperatures; thus they must keep their good mechanical properties at operating temperatures well above 100 °C with minimal changes. It is well known in the art that the addition of glass fibers as reinforcing additive can improve the heat resistance of unfilled plastics.

However, one drawback of the polypropylene glass fiber reinforced material is its limited flowability and processability. There is in fact a clear negative correlation between glass fiber content and flowability (MFR), making the forming of thin-wall or otherwise delicate parts difficult or impossible.

A composition of a propylene-alpha olefin random copolymer, glass fibers and a compatibilizer is described in WO2014/033017. The composition shows high flowability; however, no measurement of the hydrolysis resistance or of the tensile creep is provided. US2004/0220325 discloses a fiber reinforced polyolefin composition comprising a propylene ethylene random copolymer and a maleic anhydride modified polypropylene resin.

There is thus the need in the art to further increase the hydrolysis resistance and tensile creep of polypropylene compositions while maintaining good flowability.

SUMMARY OF THE INVENTION

Thus an object of the present invention is a composition comprising propylene-1-hexene random copolymer, glass fibers and a compatibilizer according to claim 1 having improved hydrolysis resistance and tensile creep while maintaining good flowability. Accordingly, it is a further object of the present invention to provide automotive and electric components according to claim 9. Furthermore, the use of said composition in an injection process is claimed according to claim 10.

The polyolefin composition of the present invention comprises:

(A) from 97.0 to 45.0 wt% of a propylene-1-hexene random copolymer, and
(B) from 2.0 to 50.0 wt% of fibers, and
(Q) from 0.3 wt% to 5.0 wt% of a compatibilizer,

the sum (A) + (B) + (Q) being 100,
wherein

(i) the copolymer has a content of 1-hexene derived units ranging from 0.6 wt% to 3.0 wt% of the copolymer,
(ii) the copolymer has a melt flow rate (MFR) measured according to the method ISO 1133 (230° C, 2.16 kg) ranging from 0.2 up to 40 g/lOmin, and
(iii) the fibers are selected in the group consisting of glass fibers, carbon fibers, metal fibers, mineral fibers, ceramic fibers, and polymer fibers.

BRIEF DESCRIPTION OF THE DRAWINGS

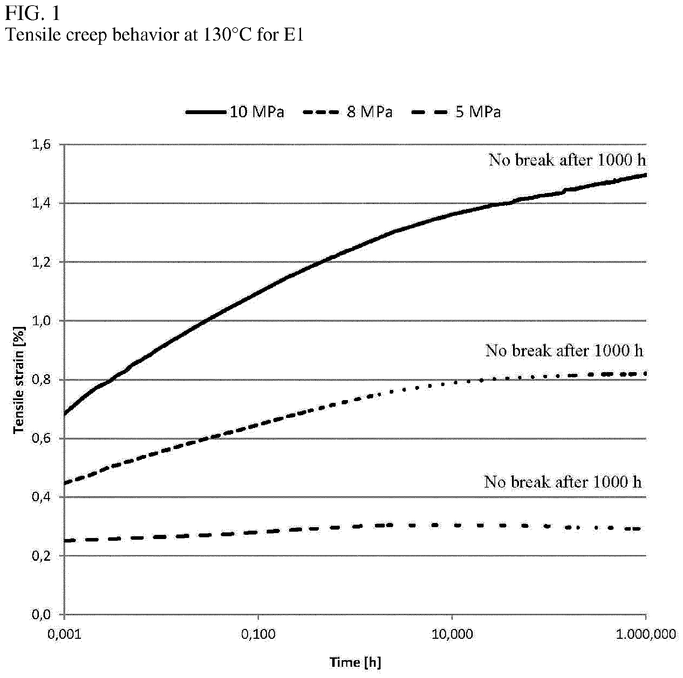

In Fig. 1 tensile creep behavior at 130 °C and under different loads for a composition according to the present invention (E1) is shown.

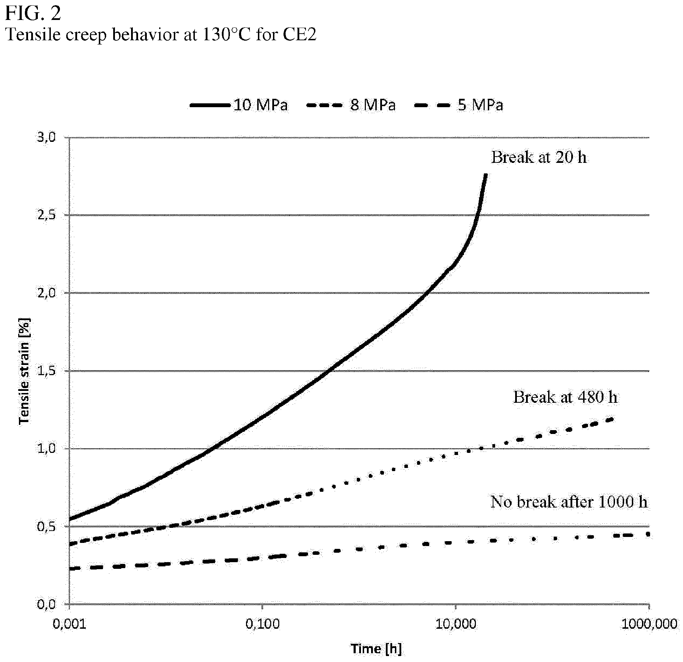

In Fig. 2 tensile creep behavior at 130 °C and under different loads for a comparative example (CE2) is shown.

## DETAILED DESCRIPTION OF THE INVENTION

Preferably, the composition of the present invention comprises:

(A) from 95.0 to 50.0 wt% of a propylene-1-hexene random copolymer, and
(B) from 4.0 to 48.0 wt% of fibers,
(Q) from 0.5 to 4.0 of a compatibilizer,

more preferably comprises:

A) from 90.0 to 55.0 wt% of a propylene-1-hexene random copolymer, and
(B) from 8.0 to 45.0 wt% of fibers,
(Q) from 0.8 to 3.0 wt% of a compatibilizer,

the sum (A) + (B) + (Q) being 100.

The 1-hexene derived units content ranges preferably from 0.6 wt% to 2.0 wt%, more preferably from 0.8 wt% to 1.8 wt% with respect to the copolymer.

Preferably, the melt flow rate (MFR) of the copolymer measured according to the method ISO 1133 (230° C, 2.16 kg) ranges from 0.4 g/lOmin to 30 g/lOmin.

In one embodiment, the melt flow rate (MFR) of the propylene-1-hexene random copolymer measured according to the method ISO 1133 (230° C, 2.16 kg) ranges preferably from 0.2 g/lOmin up to 3.0 g/lOmin , more preferably from 0.3 g/lOmin up to 1.5 g/lOmin.

Preferably, in this embodiment (B) is comprised between 4.0 to 15.0 wt%, more preferably (B) is comprised between 8.0 to 12.0 wt%, the sum (A) + (B) + (Q) being 100.

In another embodiment, the melt flow rate (MFR) of the propylene-1-hexene random copolymer measured according to the method ISO 1133 (230° C, 2.16 kg) ranges preferably from 10.0 g/lOmin up to 35.0 g/lOmin , more preferably from 15.0 g/10min up to 25.0 g/lOmin.

Preferably, in this embodiment (B) is comprised between 20.0 to 48.0 wt%, more preferably (B) is comprised between 25.0 to 45.0 wt%, the sum (A) + (B) + (Q) being 100.

The propylene-1-hexene random copolymer used in the present invention can be prepared by polymerisation in one or more polymerisation steps. Such polymerisation can be carried out in the presence of Ziegler-Natta catalysts.

Preferably, the polymerization stage is carried out in presence of a highly stereospecific heterogeneous Ziegler-Natta catalyst.

The Ziegler-Natta catalysts suitable for producing the propylene-1-hexene copolymer of the invention comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP1272533 and in the international patent application WO00/63261.

Preferably, the solid catalyst component comprises Mg, Ti, halogen and an electron donor selected from esters of phthalic acids disclosed in EP45977 and in particular of either diisobutylphathalate or dihexylphthalate or diethylphthalate and mixtures thereof.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2 \bullet pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 °C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in

cold $TiCl_4$ (generally 0 °C); the mixture is heated up to 80-130 °C and kept at this temperature for 0.5-2 hours. The treatment with $TiCl_4$ can be carried out one or more times. The internal donor can be added during the treatment with $TiCl_4$ and the treatment with the electron donor compound can be repeated one or more times. Generally, the internal donor is used in molar ratio with respect to the $MgCl_2$ of from 0.01 to 1 preferably from 0.05 to 0.5. The preparation of catalyst components in spherical form is described for example in European patent application EP-A-395083 and in the International patent application WO98/44001. The solid catalyst components obtained according to the above method contain the titanium compound, expressed as Ti, generally in an amount from 0.5 to 10% by weight.

Moreover, they show a surface area (by B.E.T. method) generally between 20 and 500 $m^2$/g and preferably between 50 and 400 $m^2$/g, and a total porosity (by B.E.T. method) higher than 0.2 $cm^3$/g preferably between 0.2 and 0.6 $cm^3$/g. The porosity (Hg method) due to pores with radius up to 10.000Å generally ranges from 0.3 to 1.5 $cm^3$/g, preferably from 0.45 to 1 $cm^3$/g.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

The Al-alkyl compound is generally used in such a quantity that the Al/Ti ratio be from 1 to 1000.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1trifluoropropyl-2-ethylpiperidinyl-dimethoxysilane and 1,1,1trifluoropropyl-metil-dimethoxysilane. The external electron donor compound is used in such an amount to give a molar ratio between the organo-aluminum compound and said electron donor compound of from 0.1 to 500.

In particular, even if many other combinations of the previously said catalyst components may allow to obtain propylene polymer compositions according to the present invention, the propylene-1-hexene polymers are preferably prepared by using catalysts containing an ester of phthalic acid as inside donor and $(cyclopentyl)_2Si(OCH_3)_2$ as outside donor.

The catalysts generally used in the process of the invention are capable of producing polypropylene with a value of xylene insolubility at ambient temperature greater than 90 wt%, preferably greater than 95 wt%.

As already mentioned said propylene-1-hexene random copolymers can be produced by well-known polymerisation process. According to the preferred polymerisation process, such polymers are produced by a polymerisation process carried out in a gas-phase polymerization reactor comprising at least two interconnected polymerisation zones.

The process according to the preferred polymerisation process is illustrated in EP application 782 587.

In detail, the process is carried out in a first and in a second interconnected polymerization zones into which propylene and 1-hexene are fed in the presence of a catalyst system and from which the polymer produced is discharged. In said process the growing polymer particles flow upward through one (first) of the said polymerisation zones (riser) under fast fluidisation conditions, leave said riser and enter another (second) polymerisation zone (downcomer) through which they flow downward in a densified form under the action of gravity, leave said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it becomes possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to said riser. It is preferable that the feeding of the gas mixture is effected below the point of reintroduction of the polymer into said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be carried out by means of a recycle line for the gaseous mixture.

The control of the polymer circulation between the two polymerisation zones can be carried out by metering the amount of polymer leaving the downcomer using means suitable for controlling the flow of solids, such as mechanical valves.

The operating parameters, such as the temperature, are those that are usual in olefin polymerisation process, for example between 50 to 120 °C.

The operating pressures can range between 0.5 and 10 MPa, preferably between 1.5 to 6 MPa.

Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases.

The various catalysts are fed up to the riser at any point of the said riser. However, they can also be fed at any point of the downcomer. The catalyst can be in any physical state, therefore catalysts in either solid or liquid state can be used.

Suitable fibers for the present compositions include fibers made of glass, carbon, metal, ceramic and organic polymers such as polyesters and nylons, e.g., aramids, in filamentary form, all of which are commercially available.

Preferably, the fibers are glass fibers.

The glass fibers may be either milled or chopped short glass fibers or long glass fibers, or may be in the form of continuous filament fibers, although preference is given to using chopped glass fibers, also known as short glass fibers or chopped strands.

The short glass fibers before being added to said propylene-1-hexene copolymer preferably have a length of from 1 to 6 mm, more preferably from 3 to 4.5 mm. The short glass fibers before being added to the propylene-1-hexene copolymer preferably have a diameter of from 8 to 20 $\mu$m, more preferably from 10 to 14 $\mu$m.

It is well known in the art that during the mixing between the propylene composition and the glass fibers for the obtainment of the compound, the length of the glass fibers is reduced. In general, the short glass fibers in the compound can have a length of from 50 up to 2000 microns, preferably from 300 to 600 microns.

The polypropylene compositions of the present invention comprise a compatibilizer as component (Q).

A compatibilizer is a component able to improve the interfacial properties between mineral fillers and polymers. Typically, it reduces the interfacial tension between the two, but simultaneously reduces the agglomeration tendency of filler particles and fibers, thus improving their dispersion within the polymer matrix.

One type which can be used as component (Q) are low molecular weight compounds having reactive polar groups which increases the polarity of the propylene-1-hexene copolymer and are intended to react with the functionalized coating or sizing of the fillers to enhance the compatibility with the polymer. Suitable functionalizations of the fillers are, for example, silanes such as aminosilanes, epoxysilanes, amidosilanes or acrylosilanes, more preferably an aminosilane.

However, the compatibilizers preferably comprise a polymer modified (functionalized) with suitable polar moieties and optionally a low molecular weight compound having reactive polar groups. Modified olefin polymers, in particular propylene homopolymers and copolymers, like copolymers of ethylene and propylene with each other or with other alpha olefins, are most preferred, as they are highly compatible with the component A) of the compositions of the present invention. Modified polyethylene or polybutene can be used as well.

In terms of structure, the modified polymers are preferably selected from graft or block copolymers. In this context, preference is given to modified polymers containing groups deriving from polar compounds, in particular selected from acid anhydrides, carboxylic acids, carboxylic acid derivatives, primary and secondary amines, hydroxyl compounds, oxazoline and epoxides, and also ionic compounds.

Specific examples of the said polar compounds are unsaturated cyclic anhydrides and their aliphatic diesters, and the diacid derivatives. In particular, one can use maleic anhydride and compounds selected from $C_1$-$C_{10}$ linear and branched dialkyl maleates, $C_1$-$C_{10}$ linear and branched dialkyl fumarates, itaconic anhydride, $C_1$-$C_{10}$ linear and branched itaconic acid dialkyl esters, maleic acid, fumaric acid, itaconic acid and mixtures thereof.

Component (Q) is used in an amount ranging from 0.3 up to 5.0 wt% with respect to the sum (A) + (B) + (Q).

Preferably, the amount of groups deriving from polar compounds in the modified polymers ranges from 0.3 to 3% by weight, more preferably from 0.3 to 1.5 wt%.

Preferred values of MFR for the modified olefin polymers are from 5 to 500 g/lOmin.

Particular preference is given to using a propylene polymer grafted with maleic anhydride as component (Q).

Preferably, the propylene polymer grafted with maleic anhydride has a grafting level from 0.3 to 1.5 wt%.

When the filler (B) is glass fibers, the aminosilanes bond with the silane hydroxyl groups to the glass fiber, while the amino groups form a stable amide bond, for example with polypropylene grafted with maleic anhydride. It is particularly advantageous to apply the low molecular weight compound to the glass fibers before they are incorporated into the composition.

The modified polymer can be produced in a simple manner by reactive extrusion of the olefin polymer, for example with maleic anhydride in the presence of free radical generators (like organic peroxides), as disclosed for instance in EP0572028.

It is also possible to use a masterbatch which comprises the fillers and the compatibilizer in premixed form.

The polyolefin compositions according to the present invention can also contain from 1 up to 5 wt% with respect to the sum (A) + (B) + (Q) of a polypropylene homopolymer, the sum (A) + (B) + (C) being 100.

The polyolefin compositions according to the present invention are obtainable by melting and mixing the components, and the mixing is effected in a mixing apparatus at temperatures generally of from 180 to 310 °C, preferably from 190 to 280 °C, more preferably from 200 to 250 °C.

Any known apparatus and technology can be used for this purpose. Useful mixing apparatus in this context are in particular extruders or kneaders, and particular preference is given to twin-screw extruders. It is also possible to premix the components at room temperature in a mixing apparatus.

Preference is given to initially melting components (A) and compatibilizer (Q), and subsequently mixing component (B) with the melt, in order to reduce the abrasion in the mixing apparatus and the fiber breakage.

It is also possible to use a masterbatch which comprises component (B) and compatibilizer (Q) in premixed form.

During the preparation of the polyolefin compositions of the present invention, besides the main components (A) and (B) and (Q), it is possible to introduce additives commonly employed in the art, such as stabilizing agents (against heat, light, U.V.), nucleating agents, plasticizers, antiacids, antistatic, slip agents such as stearates and polar waxes and water repellant agents.

In particular, the polyolefin compositions of the present invention can also contain a nucleating agent.

Examples of nucleating agents are sodium 2,2-methylene-bis-(4,6, di-tert-butylphenyl) phosphate, talc, N,N'-ethylene-bis-stearamide, stearamide, dibenzylidene sorbitol and its derivatives, like in particular methylbenzylidene sorbitol and 3,4-dimethylbenzylidene sorbitol, aluminum bis[2,2'-methylene-bis-(4,6-di-tert-butylphenyl)phosphate], phthalocyanine pigments, and the compounds disclosed in WO2008/064957 and WO2008/064958.

In general, the nucleating agents are present in amounts from 0.01 to 1% by weight with respect to the total weight of the composition.

EXAMPLES

The following examples are given to illustrate the present invention without limiting purpose.

The data relating to the propylene copolymers of the examples are determined by way of the methods reported below.

Melting Temperature and Crystallization Temperature: determined by differential scanning calorimetry (DSC). Weighting $6 \pm 1$ mg, is heated to $220 \pm 1°$ C at a rate of 20 °C/min and kept at $220 \pm 1°$ C for 2 minutes in nitrogen stream and it is thereafter cooled at a rate of 20 °C/min to $40 \pm 2$ °C, thereby kept at this temperature for 2 min to crystallize the sample. Then, the sample is again fused at a temperature rise rate of 20 °C/min up to 220 °C $\pm 1$. The second melting scan is recorded, a thermogram is obtained, and, from this, temperatures corresponding to peaks are read.

Melt Flow Rate: Determined according to the method ISO 1133 (230° C, 2.16 kg).

Density: ISO 1183

1-hexene content: Determined by $^{13}$C-NMR spectroscopy as follows:

NMR analysis. $^{13}$C NMR spectra are acquired on an AV-600 spectrometer operating at 150.91 MHz in the Fourier transform mode at 120 °C. The peak of the propylene CH was used as internal reference at 28.83. The $^{13}$C NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program | ZGPG |
| Pulse Length (P1) | for 90° |
| Total number of points (TD) | 32K |
| Relaxation Delay | 15 s |
| Number of transients | 1500 |

The total amount of 1-hexene as molar percent is calculated from diad using the following relations:

$$[P] = PP + 0.5PH$$

$$[H] = HH + 0.5PH$$

Assignments of the $^{13}$C NMR spectrum of propylene-1-hexene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}+ S_{\alpha\delta}$ | PE |
| 5 | 35.70 -35.0 | $4B_4$ | H |
| 6 | 35.00 - 34.53 | $S_{\alpha\gamma}+ S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

Flexural modulus (secant): determined according to ISO 178 on rectangular specimens 80x10x4 mm from T-bars ISO 527-1 Type 1A;

Tensile Modulus (secant): ISO 527/-1, -2 on specimens Type 1A with velocity of 1 mm/min, span of 50 mm;

Charpy notched: ISO 179 (type 1, edgewise, Notch A) on rectangular specimens 80x10x4 mm from T-bars ISO527-1 Type 1A;

Tensile strain at break, tensile stress at break, tensile stress at yield: ISO 527/-1, -2 on specimens Type 1A with velocity of 50 mm/min, span of 50 mm;

Tensile creep test: tensile strain vs. time was monitored according to DIN EN ISO 899-1 on specimens Type 1A at 120 or 130 °C, defined permanent load in the range from 3 up to 25 MPa and a testing period of maximum 1000 h.

Vicat temperature: determined according to DIN EN ISO 306, after 24 hours (10 N load).

Tensile Stress at Break was measured after immersion of the specimens in water at 95 °C for 40 days.

T-bar preparation (injection moulded): test specimens are injection moulded according to Test Method ISO 1873-2 (1989).

Example A1 - component A1

Component A1 is a propylene-1-hexene copolymer prepared by polymerising propylene and 1-hexene in the presence of a catalyst under continuous conditions in a plant comprising a precontact section, a prepolymerisation section and a polymerisation apparatus that comprises two interconnected cylindrical reactors, riser and downcomer. Fast fluidisation conditions are established in the riser by feeding gas recycled from the gas-solid separator.

The catalyst employed comprises a catalyst component prepared by analogy with example 5 of EP-A-728769 but using microspheroidal $MgCl_2 \cdot 1.7C_2H_5OH$ instead of $MgCl_2 \cdot 2.1C_2H_5OH$. Such catalyst component is mixed with dicyclopentyl dimethoxy silane (DCPMS) as external donor and with triethylaluminium (TEAL) in the precontact section. The catalyst system is then subjected to pre-polymerisation before introducing it into the polymerisation apparatus.

The polymer particles exiting the reactor are subjected to a steam treatment to remove the reactive monomers and volatile substances and then dried. The polymer particles are extruded with a usual packing of stabilisers.

The main operative conditions of the polymerisation process are indicated in Table 1.

In Table 2 are reported the main properties of A1.

Example A2 - component A2

Component A2 is a propylene-1-hexene copolymer prepared as component A1 but with an hydrogen content in order to obtain a copolymer with MFR of 0.4 g/lOmin according to the method ISO 1133 (230° C, 2.16 kg).

The main operative conditions of the polymerisation process are indicated in Table 1.

In Table 2 are reported the main properties of A2.

Table 1

| Example | | A1 | A2 |
|---|---|---|---|
| PRECONTACT | | | |
| Precontact Temperature [°C] | | 15 | 12 |
| Precontact Residence Time [min] | | 10 | 17.5 |
| TEA/solid catalyst component [g/g] | | 6 | 5 |
| TEA/DCPMS [g/g] | | 4 | 4 |
| PREPOLYMERIZATION | | | |
| Prepolymerization Temperature [°C] | | 20 | 30 |
| Prepolymerization Residence Time [min] | | 5 | 12.2 |
| POLYMERIZATION | | | |
| Polymerization Temperature[°C] | | 80 | 80 |
| Pressure (barg) | | 25 | 25 |
| $C_6/(C_3+C_6)$ [mol/mol] | Riser | 0.007 | 0.0125 |
| $C_6/(C_3+C_6)$ [mol/mol] | Downcomer | - | - |
| $H_2/C_3^{--}$ [mol/mol] | Riser | 0.051 | 0.003 |
| $H_2/C_3^{--}$ [mol/ppm] | Downcomer | - | 35 |
| $H_2$ hydrogen; $C_3$ propylene; $C_6$ 1-hexene | | | |

Table 2

| Example | A1 | A2 |
|---|---|---|
| 1-hexene content [wt%] | 1.3 | 1.7 |
| Density [g/cm³] | 0.9 | 0.9 |
| MFR [g/10 min] | 20 | 0.4 |
| Melting Temperature [°C] | 153 | 152 |
| Crystallization Temperature [°C] | 105 | 106 |
| Flexural modulus [MPa] | 1518 | 1300 |
| Tensile stress at yield [MPa] | 35.4 | 33.4 |
| Elongation at yield [%] | 9.5 | 10.9 |

(continued)

| Example | A1 | A2 |
|---|---|---|
| Tensile stress at break [MPa] | 21.1 | 30.0 |
| Elongation at break [%] | 760 | 490 |
| Xylene-soluble content [wt%] | 1.3 | 2.5 |

Component A3 is a polypropylene homopolymer having density 0.9 g/cm$^3$ and MFR 140 g/lOmin according to the method ISO 1133 (230° C, 2.16 kg).

Component A4 is a polypropylene homopolymer having density 0.9 g/cm$^3$ and MFR 10 g/lOmin according to the method ISO 1133 (230° C, 2.16 kg).

Component A5 is a random copolymer of propylene and ethylene having ethylene derived units content of 1.3 wt% with respect to the copolymer, density 0.9 g/cm$^3$ and MFR 25 g/lOmin according to the method ISO 1133 (230° C, 2.16 kg).

Component A6 is a polypropylene homopolymer having density 0.9 g/cm$^3$ and MFR 0.4 g/lOmin according to the method ISO 1133 (230° C, 2.16 kg).

| Examples | E1* | E2** | CE1** | CE2* | CE3* | E3*** | CE4*** |
|---|---|---|---|---|---|---|---|
| Component (A) | A1 | A1 | A3 | A4 | A5 | A2 | A6 |
| (A) wt% ((A) + (B) +(Q) = 100) | 68.2 | 56.0 | 56.0 | 68.2 | 68.2 | 89.0 | 89.0 |
| (B) wt% ((A) + (B) +(Q) = 100) | 30.3 | 41.4 | 41.4 | 30.3 | 30.3 | 10.2 | 10.2 |
| (Q) wt% ((A) + (B) +(Q) = 100) | 1.5 | 2.6 | 2.6 | 1.5 | 1.5 | 0.8 | 0.8 |
| Melt flow rate of (A) [g/10 min] | 20 | 20 | 140 | 10 | 25 | 0.4 | 0.4 |
| Glass fibers [wt%] | 30 | 40 | 40 | 30 | 30 | 10 | 10 |
| Comonomer | C6 | C6 | 0 | 0 | C2 | C6 | 0 |
| Comonomer content [wt%] | 1.1 | 1.1 | 0 | 0 | 1.3 | 1.3 | 0 |
| Melt volume flow rate (230/2.16) [cm$^3$/10 min] | 6 | 5.6 | 30.8 | 3.6 | 8.3 | 0.35 | 0.6 |
| Density [g/cm$^3$] | 1.14 | 1.21 | 1.21 | 1.14 | 1.14 | 0.98 | 0.98 |
| Tensile stress at yield [MPa] | 101.4 | 114 | 118 | 103.2 | 100.7 | 47.9 | 50.3 |
| Tensile strain at break [%] | 3.7 | 3.5 | 2.4 | 3.6 | 3.6 | 8.1 | 7.6 |
| Tensile stress at break [MPa] | 99.8 | 112 | 115 | 100.2 | 100 | 44.3 | 47.2 |
| Tensile modulus [MPa] | 6520 | 9070 | 9610 | 6660 | 6400 | 2740 | 2760 |
| Flexural modulus [MPa] | 6884 | 8800 | 9230 | 6987 | 6542 | n | n |
| Variation of tensile stress at break after hot water immersion, 95°C, 40 days [%] | - 14.5 | na | na | - 22.2 | na | - 10.7 | - 20.3 |
| Tensile creep 10 MPa [h until rupture] 130°C | > 1000 | na | na | 20 | 44 | na | na |
| Tensile creep 8 MPa [h until rupture] 130°C | > 1000 | > 1000 | na | 479 | 477 | na | na |
| Tensile creep 5 MPa [h until rupture] 130°C | > 1000 | > 1000 | > 1000 | > 1000 | > 1000 | na | na |
| Tensile creep 16 MPa [h until rupture] 120°C | na | > 1000 | 12 | na | na | na | na |
| Tensile creep 5 MPa [h until rupture] 120°C | na | na | na | na | na | > 1000 | 280 |
| Charpy notched 23 °C [kJ/m$^2$] | 12.5 | 11.2 | 8.5 | 11.9 | 12.9 | 6.8 | 10.0 |
| Charpy notched 0 °C [kJ/m$^2$] | 10.7 | 10.2 | 8.0 | 10.6 | 10.6 | 4.3 | 5.3 |

(continued)

| Examples | E1* | E2** | CE1** | CE2* | CE3* | E3*** | CE4*** |
|---|---|---|---|---|---|---|---|
| Charpy notched -30 °C [kJ/m$^2$] | 9.5 | 10 | na | 9.4 | 9.8 | 3.2 | 4.3 |
| VICAT [°C] | 135 | 138 | 137 | 136 | 131 | 105 | 108 |

Example E1

Composition of Example E1 is obtained by using A1 propylene-1-hexene copolymer as component (A), 30.3 wt% of glass fibers as component (B) and 2.5 wt% of component (Q) with respect to the sum (A) + (B) + (Q).
Component (B) is a Chopped Strand ADVANTEX DS 2200-10P (3B) with a fiber length of 4 mm and diameter of 10 μm.
Component (Q) is Exxelor PO1020 from Exxon, MFR approx.400 g/lOmin (230° C, 2.16 kg), which is a commercial polypropylene highly functionalized with maleic anhydride (grafting level in the range of 0.5 - 1.0 wt%).
The composition is prepared by extrusion, using a twin screw extruder, model Werner&Pfleiderer ZSK40SC. This line has a process length of 43 L/D and is provided with gravimetric feeders. Components (A) and (Q) are fed into the first barrel and component B) is fed into the fifth barrel, via forced side feeding.
The composition contains also 0.7 wt% of conventional antioxidant additives and 0.2 wt% of erucamide, both of them with respect to the sum (A) + (B) + (Q).
A strand die plate with cooling bath and strand cutter Scheer SGS100 is used to form pellets; vacuum degassing (barrel No. 8) is also applied to extract fumes and decomposition products.
Running conditions:

Screw speed: 200 rpm;
Capacity: 50-60 kg/h;
Barrel Temperature: 230-250°C.

Example E2

Composition of Example E2 is obtained by using A1 as component (A), 41.4 wt% of glass fibers as component (B) and 2.6 wt% of component (Q) with respect to the sum (A) + (B) + (Q).
Components (B) and (Q) are the same of that used in Example E1.
The composition contains also 1.1 wt% of conventional antioxidant additives, 0.2 wt% of erucamide and 2.1 wt% of carbon black MB PE 4687, each of them with respect to the sum (A) + (B) + (Q).
The composition is prepared by extrusion using a twin screw extruder in the same conditions used for Example E1.

Example E3

Composition of Example E3 is obtained in the same conditions of Example E1 by using A2 as component (A), 10.2 wt% of glass fibers as component (B) and 2.5 wt% of component (Q) with respect to the sum (A) + (B) + (Q).
Components (B) and (Q) are the same of that used in Example E1.
The composition contains also 0.9 wt% of conventional antioxidant additives and 1.4 wt% of carbon black MB PE 4687, both of them with respect to the sum (A) + (B) + (Q).
The composition is prepared by extrusion using a twin screw extruder in the same conditions used for Example E1.

Example CE1

Composition of Example CE1 is obtained in the same conditions of Example E1 by using A3 as component (A), 40 wt% of glass fibers as component (B) and 0.8 wt% of component (Q) with respect to the sum (A) + (B) + (Q).
Components (B) and (Q) are the same of that used in Example E1.
The composition contains also 1.1 wt% of conventional antioxidant additives, 0.2 wt% of erucamide and 2.1 wt% of carbon black MB PE 4687, each of them with respect to the sum (A) + (B) + (Q).
The composition is prepared by extrusion using a twin screw extruder in the same conditions used for Example E1.

Example CE2

Composition of Example CE2 is obtained in the same conditions of Example E1 by using A4 as component (A), 30 wt% of glass fibers as component (B) and 0.8 wt% of component (Q) with respect to the sum (A) + (B) + (Q).
Components (B) and (Q) are the same of that used in Example E1.
The composition contains also 0.7 wt% of conventional antioxidant additives and 0.2 wt% of erucamide, both of them with respect to the sum (A) + (B) + (Q).
The composition is prepared by extrusion using a twin screw extruder in the same conditions used for Example E1.

Example CE3

Composition of Example CE3 is obtained in the same conditions of Example E1 by using A5 as component (A), 10 wt% of glass fibers as component (B) and 0.8 wt% of component (Q) with respect to the sum (A) + (B) + (Q).
Components (B) and (Q) are the same of that used in Example E1.
The composition contains also 0.7 wt% of conventional antioxidant additives and 0.2 wt% of erucamide, both of them with respect to the sum (A) + (B) + (Q).
The composition is prepared by extrusion using a twin screw extruder in the same conditions used for Example E1.

Example CE4

Composition of Example CE4 is obtained in the same conditions of Example E1 by using A6 as component (A), 10 wt% of glass fibers as component (B) and 0.8 wt% of component (Q) with respect to the sum (A) + (B) + (Q).
Components (B) and (Q) are the same of that used in Example E1.
The composition contains also 0.9 wt% of conventional antioxidant additives and 1.4 wt% of carbon black MB PE 4687, both of them with respect to the sum (A) + (B) + (Q).
The composition is prepared by extrusion using a twin screw extruder in the same conditions used for Example E1.

**Claims**

1. A polyolefin composition comprising:

   (A) from 97.0 to 45.0 wt% of a propylene-1-hexene random copolymer,
   (B) from 2.0 to 50.0 wt% of fibers, and
   (Q) from 0.3 wt% to 5.0 wt% of a compatibilizer,

   the sum (A) + (B) + (Q) being 100,
   wherein

   (i) the copolymer has a content of 1-hexene derived units ranging from 0.6 wt% to 3.0 wt% with respect to the copolymer,
   (ii) the copolymer has the melt flow rate (MFR) measured according to the method ISO 1133 (230° C, 2.16 kg) ranging from 0.2 up to 40 g/lOmin,
   (iii) the fibers are selected from the group consisting of glass fibers, carbon fibers, metal fibers, mineral fibers and ceramic fibers.

2. The polyolefin composition according to claim 1 wherein the compatibilizer (Q) is a propylene polymer grafted with maleic anhydride with grafting level from 0.3 to 1.5 wt%.

3. The polyolefin composition according to claim 1 or 2 wherein the fibers are glass fibers.

4. The polyolefin composition according to any of claims 1-3 further comprising 5 wt% with respect to the sum (A)+(B)+(Q) of a polypropylene homopolymer.

5. The polyolefin composition according to any of claims 1-4 wherein the content of 1-hexene derived units ranges from 0.6 wt% to 2.0 wt% with respect to the of the copolymer.

6. The polyolefin composition according to claim 5 wherein the content of 1-hexene derived units ranges from 0.8 wt% to 1.8 wt% with respect to the copolymer.

7. The polyolefin composition according to any of claims from 1 to 6 wherein (A) is from 95.0 to 50.0 wt%, (B) is from 4.0 to 48.0 wt% and (Q) is from 0.5 to 4.0 wt%, the sum (A) + (B) + (Q) being 100.

8. The polyolefin composition according to any of claims from 1 to 7 wherein the melt flow rate (MFR) of the copolymer measured according to the method ISO 1133 (230° C, 2.16 kg) ranges from 0.4 g/lOmin to 30 g/lOmin.

9. The polyolefin composition according to claim 8 wherein the melt flow rate (MFR) of the copolymer measured according to the method ISO 1133 (230° C, 2.16 kg) ranges from 0.2 g/10 min to 3.0 g/lOmin, preferably from 0.3 g/lOmin to 1.5 g/lOmin.

10. The polyolefin composition according to claim 9 wherein (B) is comprised between 4.0 to 15.0 wt%, preferably from 8.0 to 12.0 wt%, the sum (A) + (B) + (Q) being 100.

11. The polyolefin composition according to claim 8 wherein the melt flow rate (MFR) of the copolymer measured according to the method ISO 1133 (230° C, 2.16 kg) ranges from 10.0 g/10 min to 35.0 g/10 min, preferably from 15.0 g/lOmin to 25.0 g/10 min.

12. The polyolefin composition according to claim 11 wherein (B) is comprised between 20.0 to 48.0 wt%, preferably from 25.0 to 45.0 wt%, the sum (A) + (B) + (Q) being 100.

13. Automotive or electric component comprising the composition according to any of claims from 1 to 12.

14. Use of the composition according to any of claims from 1 to 12 in an injection process for the obtainment of automotive and electronic and electric components.

**Patentansprüche**

1. Polyolefinzusammensetzung, umfassend:

   (A) 97,0 bis 45,0 Gew.% eines statistischen Propylen-1-Hexen-Copolymers,
   (B) 2,0 Gew.% bis 50,0 Gew.% Fasern, und
   (Q) 0.3 Gew.% bis 5,0 Gew.% eines Verträglichmachers,

   wobei die Summe aus (A) + (B) + (Q) 100 beträgt;
   wobei

   (i) das Copolymer einen Gehalt an von 1-Hexen abgeleiteten Einheiten im Bereich von 0,6 Gew.% bis 3,0 Gew.% in Bezug auf das Copolymer aufweist,
   (ii) das Copolymer eine Schmelzflussrate (MFR), gemessen gemäß dem Verfahren ISO 1133 (230 °C, 2,16 kg) im Bereich von 0,2 bis 40 g/10 min aufweist;
   (iii) die Fasern ausgewählt sind aus der Gruppe bestehend aus Glasfasern, Kohlefasern, Metallfasern, Mineralfasern und Keramikfasern.

2. Polyolefinzusammensetzung nach Anspruch 1, wobei der Verträglichmacher (Q) ein Propylenpolymer ist, das mit Maleinsäureanhydrid auf ein Pfropfniveau von 0,3 bis 1,5 Gew.% gepfropft worden ist.

3. Polyolefinzusammensetzung nach Anspruch 1 oder 2, wobei die Fasern Glasfasern sind.

4. Polyolefinzusammensetzung nach einem der Ansprüche 1 bis 3, das des Weiteren 5 Gew.%, bezogen auf die Summe von (A) + (B) + (Q), eines Polypropylenhomopolymers umfasst.

5. Polyolefinzusammensetzung nach einem der Ansprüche 1 bis 4, wobei der Gehalt an von 1-Hexen abgeleiteten Einheiten im Bereich von 0,6 Gew.% bis 2,0 Gew.% liegt, bezogen auf das Copolymer.

6. Polyolefinzusammensetzung nach Anspruch 5, wobei der Gehalt an von 1-Hexen abgeleiteten Einheiten im Bereich von 0,8 Gew.% bis 1,8 Gew.% liegt, bezogen auf das Copolymer.

7. Polyolefinzusammensetzung nach einem der Ansprüche 1 bis 6, wobei (A) 95,0 bis 50,0 Gew.% beträgt, (B) 4,0 bis 48,0 Gew.% beträgt, und (Q) 0,5 bis 4,0 Gew.% beträgt, wobei die Summe aus (A) + (B) + (Q) 100 beträgt.

8. Polyolefinzusammensetzung nach einem der Ansprüche 1 bis 7, wobei die Schmelzflussrate (MFR) des Copolymers, gemessen gemäß dem Verfahren ISO 1133 (230 °C, 2,16 kg), im Bereich von 0,4 g/10 min bis 30 g/10 min liegt.

9. Polyolefinzusammensetzung nach Anspruch 8, wobei die Schmelzflussrate (MFR) des Copolymers, gemessen gemäß dem Verfahren ISO 1133 (230 °C, 2,16 kg), im Bereich von 0,2 g/10 min bis 3,0 g/10 min, vorzugsweise 0,3 g/10 min bis 1,5 g/10 min liegt.

10. Polyolefinzusammensetzung nach Anspruch 9, wobei (B) zwischen 4,0 und 15,0 Gew.%, vorzugsweise 8,0 bis 12,0 Gew.% ausmacht, wobei die Summe aus (A) + (B) + (Q) 100 beträgt.

11. Polyolefinzusammensetzung nach Anspruch 8, wobei die Schmelzflussrate (MFR) des Copolymers, gemessen gemäß dem Verfahren ISO 1133 (230 °C, 2,16 kg), im Bereich von 10,0 g/10 min bis 35,0 g/10 min, vorzugsweise 15,0 g/10 min bis 25,0 g/10 min liegt.

12. Polyolefinzusammensetzung nach Anspruch 11, wobei (B) zwischen 20,0 und 48,0 Gew.%, vorzugsweise 25,0 bis 45,0 Gew.% ausmacht, wobei die Summe aus (A) + (B) + (Q) 100 beträgt.

13. Automobil- oder Elektrokomponente, welche die Zusammensetzung gemäß einem der Ansprüche 1 bis 12 umfasst.

14. Verwendung der Zusammensetzung nach einem der Ansprüche 1 bis 12 in einem Spritzprozess, um die Automobil- und Elektronik- und Elektrokomponenten zu erhalten.


**Revendications**

1. Composition polyoléfinique comprenant :

(A) 97,0 à 45,0% en poids d'un copolymère statistique de propylène-1-hexène,
(B) 2,0 à 50,0% en poids de fibres et
(Q) 0,3% en poids à 5,0% en poids d'un agent de compatibilité,

la somme (A) + (B) + (Q) valant 100,

(i) le copolymère présentant une teneur en motifs dérivés de 1-hexène allant de 0,6% en poids à 3,0% en poids par rapport au copolymère,
(ii) le copolymère présentant un indice de fluidité à chaud (MFR), mesuré selon la méthode de la norme ISO 1133 (230°C, 2,16 kg), allant de 0,2 à 40 g/10 min,
(iii) les fibres étant choisies dans le groupe constitué par les fibres de verre, les fibres de carbone, les fibres métalliques, les fibres minérales et les fibres céramiques.

2. Composition polyoléfinique selon la revendication 1, l'agent de compatibilité (Q) étant un polymère de propylène greffé par de l'anhydride maléique à un taux de greffage de 0,3 à 1,5% en poids.

3. Composition polyoléfinique selon la revendication 1 ou 2, les fibres étant des fibres de verre.

4. Composition polyoléfinique selon l'une quelconque des revendications 1 à 3, comprenant en outre 5% en poids par rapport à la somme (A) + (B) + (Q) d'un homopolymère de polypropylène.

5. Composition polyoléfinique selon l'une quelconque des revendications 1 à 4, la teneur en motifs dérivés de 1-hexène allant de 0,6% en poids à 2,0% en poids par rapport au copolymère.

6. Composition polyoléfinique selon la revendication 5, la teneur en motifs dérivés de 1-hexène allant de 0,8% en poids à 1,8% en poids par rapport au copolymère.

7. Composition polyoléfinique selon l'une quelconque des revendications de 1 à 6, (A) représentant 95,0 à 50,0% en poids, (B) représentant 4,0 à 48,0% en poids et (Q) représentant 0,5 à 4,0% en poids, la somme (A) + (B) + (Q) valant 100.

8. Composition polyoléfinique selon l'une quelconque des revendications de 1 à 7, l'indice de fluidité à chaud (MFR) du copolymère, mesuré selon la méthode de la norme ISO 1133 (230°C, 2,16 kg), allant de 0,4 g/10 min à 30 g/10 min.

9. Composition polyoléfinique selon la revendication 8, l'indice de fluidité à chaud (MFR) du copolymère, mesuré selon la méthode de la norme ISO 1133 (230°C, 2,16 kg), allant de 0,2 g/10 min à 3,0 g/10 min, préférablement 0,3 g/10 min à 1,5 g/10 min.

10. Composition polyoléfinique selon la revendication 9, (B) représentant entre 4,0 et 15,0% en poids, préférablement 8,0 à 12,0% en poids, la somme (A) + (B) + (Q) valant 100.

11. Composition polyoléfinique selon la revendication 8, l'indice de fluidité à chaud (MFR) du copolymère, mesuré selon la méthode de la norme ISO 1133 (230°C, 2,16 kg), allant de 10,0 g/10 min à 35,0 g/10 min, préférablement 15,0 g/10 min à 25,0 g/10 min.

12. Composition polyoléfinique selon la revendication 11, (B) représentant entre 20,0 et 48,0% en poids, préférablement 25,0 à 45,0% en poids, la somme (A) + (B) + (Q) valant 100.

13. Composant automobile ou électrique comprenant la composition selon l'une quelconque des revendications de 1 à 12.

14. Utilisation de la composition selon l'une quelconque des revendications de 1 à 12 dans un procédé d'injection pour l'obtention de composants automobiles et électroniques et électriques.

FIG. 1
Tensile creep behavior at 130°C for E1

FIG. 2
Tensile creep behavior at 130°C for CE2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014033017 A
- US 20040220325 A
- EP 45977 A
- EP 361494 A
- EP 728769 A
- EP 1272533 A
- WO 0063261 A
- US 4399054 A
- US 4469648 A
- EP 395083 A
- WO 9844001 A
- EP 782587 A
- EP 0572028 A
- WO 2008064957 A
- WO 2008064958 A